# EUROPÄISCHE PATENTANMELDUNG

(11) **EP 4 716 206 A1**
(43) Veröffentlichungstag der Anmeldung: **25.03.2026**
(21) Anmeldenummer: 24201130.2
(22) Anmeldetag: 18.09.2024
(51) Int. Cl.: H04N 1/60

(54) **VERFAHREN ZUR STEUERUNG DER FARBGETREUEN FUNKTIONSWEISE VON MINDESTENS EINEM DRUCKER**

(71) Anmelder: IPAC Improve Process Analytics and Control GmbH, 9524 Villach (AT)
(72) Erfinder: Bergmann, Bernd, 30900 Wedemark (DE)
(74) Vertreter: Cohausz & Florack

(57) **Zusammenfassung**

Die Erfindung betrifft ein Verfahren zur Steuerung der farbgetreuen Funktionsweise von mindestens einem Drucker, a) bei dem eine Eingangsdatei mit einem Design als Originalmuster mit einem Referenzdrucker ausgedruckt wird, b) bei dem das Originalmuster mit einem optischen Messsystem digitalisiert und in einem L*a*b*-Farbraum als L*a*b*-Originalmusterdatei gespeichert wird, c) bei dem die Eingangsdatei mit einem Eingabeprofil in einen geräteunabhängigen Austauschfarbraum transferiert und eine L*a*b*-Austauschbilddatei erstellt wird, d) bei dem die L*a*b*-Austauschbilddatei mit einem gerätespezifischen Ausgabeprofil in einen für einen Arbeitsdrucker anwendbaren Druckfarbraum transferiert und eine Vergleichsbilddatei erzeugt wird, e) bei dem die Vergleichsbilddatei mit dem Arbeitsdrucker auf einem Trägermaterial als Vergleichsdruckbild gedruckt wird, das Vergleichsdruckbild mit einem optischen Messsystem vermessen wird und eine L*a*b*Vergleichsbilddatei erzeugt wird, f) bei dem der Mittelwert in mindestens einem der L*a*b*-Kanäle in der L*a*b*-Vergleichsbilddatei und der Mittelwert in dem mindestens einem der L*a*b*-Kanäle in der L*a*b*-Originalmusterdatei ermittelt werden, g) bei dem die Differenz der Mittelwerte in dem mindestens einem der L*a*b*-Kanäle berechnet wird, h) bei dem die Werte in der L*a*b*-Austauschbilddatei in dem mindestens einen L*a*b*-Kanal um die berechnete Differenz korrigiert werden und i) bei dem die korrigierte L*a*b*-Austauschbilddatei mit dem gerätespezifischen Ausgabeprofil in einen für einen Arbeitsdrucker anwendbaren Druckfarbraum transferiert und mit dem Arbeitsdrucker auf einem Trägermaterial als Vergleichsdruckbild gedruckt wird.

## Beschreibung

Die Erfindung betrifft ein Verfahren zur Steuerung der farbgetreuen Funktionsweise von mindestens einem Drucker.

In der Druckindustrie ist eines der wesentlichen Ziele die Erzeugung möglichst gleicher Bild- und Farbeneindrücke der zu bedruckenden Materialien. Die sogenannte Farbkonstanz auch beim Druck unterschiedlicher Chargen auf unterschiedlichen Trägermaterialien soll möglichst immer gleich hoch sein. Dies gilt insbesondere dann, wenn Corporate Identity gewünscht ist. Die von einer Firma gewählte Farbe bzw. die gewählten Farben sollen immer gleich aussehen, unabhängig davon, ob auf Glas, Papier, Kunststoff oder einem anderen Trägermaterial gedruckt wird. Das möglichst identische Aussehen der Druckprodukte ist gewünscht und somit ein Ziel der Druckindustrie.

Druckverfahren, Drucker, Druckfarbe und vor allem das Trägermaterial haben einen großen Einfluss darauf, wie ein Druckergebnis, das auf der Basis einer Druckdatei gedruckt worden ist, im ausgedruckten Zustand aussieht. Unter Druckfarbe wird jedes Druckmedium unter anderem wie Tinte oder Toner verstanden, mit dem Farbpigmente auf das Trägermaterial aufgebracht werden.

Während des industriellen Druckens, sei es im Single-Pass-Betrieb mit feststehendem Druckkopf und sich bewegenden Trägermaterial oder im Multi-Pass-Betrieb mit sich bewegendem Druckerkopf bei feststehendem Trägermaterial, ist es zur Einhaltung der vorgegebenen Farbkonstanz erforderlich, die Funktionsweise des Drucksystems einschließlich des Farbmanagementsystems zu überprüfen und zu korrigieren.

Die Aufgabe eines Farbmanagementsystems besteht darin, bei der Weitergabe von Bildinformationen zwischen Geräten und Computerprogrammen diese so zu konvertieren, dass in der Verarbeitungskette ein möglichst geringer Verlust der Farbinformation entsteht. Beim Farbmanagement werden geräteabhängige Farbprofile und ein geräteunabhängiger Austauschfarbraum verwendet.

Die geräteabhängigen Farbprofile (englisch: Device Connection Space, DCS) umfassen den für das Gerät relevanten Ausschnitt der wahrnehmbaren Farben. Farben außerhalb des geräteabhängigen Farbprofils kann das Gerät nicht verarbeiten. Als Geräteprofil kommen in der Regel ICC-Profile zum Einsatz, die auch als Farbprofil bezeichnet werden, wobei die Abkürzung ICC für International Color Consortium steht. Ein ICC-Profil ist ein genormter Datensatz, der den Farbumfang eines Farbeingabe- oder Farbwiedergabegeräts beschreibt, z. B. eines Monitors, Druckers oder Scanners. Der Farbumfang wird auch Geräte-Farbraum oder Gamut genannt.

Durch ein ICC-Farbprofil werden beispielsweise die Zahlen des RGB-Formates (R - rot, G - grün, B - blau) zu einer Maßeinheit mit einem festen Bezug zum wahrnehmbaren Farbraum. Das Koordinatensystem der wahrnehmbaren Farben ergibt sich aus dem CIE-Normvalenzsystem und ist gegeben durch die Farbräume CIEXYZ oder CIELAB.

Das Geräteprofil beschreibt somit die Abweichung des Gerätes zum Austauschfarbraum. Bei der Bildaufnahme wird üblicherweise das Profil des Aufnahmegerätes in die Bilddatei eingebettet. Falls kein Farbprofil eingebettet wird, dann wird bei der Weiterverarbeitung als Farbraum normalerweise sRGB angenommen. Die beteiligten gerätespezifischen Farbräume beruhen häufig auf dem RGB-Farbmodell, wenn Digitalkameras und Monitore eingesetzt werden, oder dem CMYK-Farbmodell für Drucker (C - Cyan, M - Magenta, Y - Yellow, K- Key (schwarz)).

Ein geräteunabhängiger Austauschfarbraum (englisch Profile Connection Space, PCS) beruht auf CIELAB oder CIEXYZ und kann alle wahrnehmbaren Farben darstellen. Er dient als Bindeglied zwischen dem Eingangsfarbraum und dem Ausgangsfarbraum und wird daher manchmal auch als Verbindungs-Farbraum bezeichnet.

Jedes im Farbmanagement eingebundene Gerät (Monitor, Digitalkamera, Drucker, Scanner etc.) benötigt ein eigenes ICC-Profil. Es enthält Übersetzungstabellen oder Berechnungsparameter, anhand derer die Konvertierung der Farbdaten vom bzw. in den Austauschfarbraum erfolgt.

Die Umrechnung von einem geräteabhängigen Eingangsfarbraum in einen Austauschfarbraum ist verlustfrei, da der Austauschfarbraum größer ist und den DCS komplett umfasst. Die Umrechnung in die Gegenrichtung ist immer verlustbehaftet, da kein Gerät alle wahrnehmbaren Farben darstellen kann.

Hinsichtlich ihres Verwendungszweckes unterscheidet man Eingabeprofile, beispielsweise RGB in den Austauschfarbraum und Ausgabeprofile vom Austauschfarbraum nach beispielsweise CMYK für einen Drucker.

In professionellen Anwendungen besteht die Möglichkeit den Farbmanagementprozess zu optimieren und beispielsweise den Einfluss des Druckerpapiers oder der Betriebsbedingungen der Geräte auf die Farbwiedergabe zu berücksichtigen.

Die Erzeugung von ICC-Profilen für einen spezifischen Drucker erfolgt, indem man ein Testchart mit vielen Farbfeldern ausdruckt, deren Farbwerte bekannt sind.

Anschließend werden die L*a*b*-Werte dieser Farbfelder mit einem Spektralfotometer gemessen. Dadurch wird eine Beziehung zwischen den ausgedruckten RGB- bzw. CMYK-Daten und den sichtbaren CIE-L*a*b*-Farbwerten hergestellt. Es ist also bekannt, welcher Farbeindruck (L*a*b*-Wert) entsteht, wenn eine bestimmte Tinten- oder Toner-Kombination auf diesem Drucker ausgegeben wird. In einem Profilerstellungsprogramm werden die gemessenen Daten in eine Form gebracht, die der Spezifikation des ICC (International Color Consortium) entspricht. Es entstehen standardisierte Tabellen, die eine Umrechnung von RGB bzw. CMYK in den Austauschfarbraum (CIELAB oder XYZ) und umgekehrt erlauben. Zu beachten ist, dass man für jede Tinten/Toner- und Papierkombination ein eigenes Profil erstellen muss, um berechenbare und korrekte Druckergebnisse zu erhalten. Andernfalls kann es zu Farbabweichungen bzw. Farbstichen kommen.

Aus der DE 10 2015 106 770 B3 sind ein Verfahren und ein System zur farbtreuen Ausgabe eines vorgegebenen Digitalbildes auf einem spezifischen Ausgabegerät bekannt. Dabei wird ein Farbchart aus Farbfeldern für ein Ausgabeprofil zusammengestellt, die einerseits standardisierte Farben und andererseits sich aus dem zu druckenden Design zu ermittelnde Farben enthalten sind. Somit können die durch die Farbfelder gebildeten Stützstellen in dem Profil besser an das zu druckende Design anpasst werden. Das Farbchart wird wegen der Spezifizität eines Teils der Farbfelder auch als Fingerabdruckchart bzw. die zugrunde liegende Datei als Fingerabdruckdatei bezeichnet. Das daraus abgeleitete Eingabeprofil wird dann als Fingerabdruckausgabedatei bezeichnet.

Trotz dieser Anpassung des Eingabeprofils wirken sich jedoch leichte Veränderungen des Substrats (Weißwert), Größe der Tintentropfen beim Inkjet-Verfahren, etc. - zusammengefasst veränderte Druckbedingungen - negativ auf das Ergebnis aus. Das Druckergebnis genügt in Regel jedoch immer noch nicht den hohen Ansprüchen der Dekorindustrie, so dass eine finale manuelle Korrektur zur Freigabe erforderlich ist.

Der vorliegenden Erfindung liegt daher die Aufgabe zugrunde, das Verfahren zur Überwachung der Funktionsweise von mindestens einem Drucker weiter zu verbessern.

Die zuvor aufgezeigte Aufgabe wird erfindungsgemäß durch ein Verfahren mit den Merkmalen des Anspruchs 1 gelöst, wobei weitere Ausgestaltungen des Verfahrens in den Unteransprüchen angegeben sind.

Dieses Verfahren zur Steuerung der farbgetreuen Funktionsweise von mindestens einem Drucker weist eine Reihe von Schritten auf.
a) Ausdrucken einer Eingangsdatei mit einem Design als Originalmuster mit einem Referenzdrucker. Das Originalmuster wird von einem Referenzdrucker gedruckt, liegt physisch vor und kann gegebenenfalls als Vergleichsmuster für einen Bemusterungsprozesses dienen. Das Originalmuster ist daher ein Ausdruck mit spezifischen Druckfarben auf der Basis einer Eingangsdatei mit dem damit zu erzeugenden Design und spezieller Drucktechnik auf einem spezifischen Material. Dieses Druckergebnis soll anschließend auf einer weiteren Druckanlage mit einem Arbeitsdrucker reproduziert werden.
b) Digitalisieren des Originalmusters mit einem optischen Messsystem und anschließendes Speichern in einem L*a*b*-Farbraum als L*a*b*-Originalmusterdatei, bevorzugt in CIELAB. Das optische Messsystem kann dabei jedes bildgebende Farbmesssystem sein. Die L*a*b*-Originalmusterdatei kann auch als digitales Urmuster bezeichnet werden.

Das bildgebende Farbmesssystem kann als spektrales Messsystem oder als Farbkamera, insbesondere als RGB-Kamera ausgebildet sein. Die räumliche Auflösung eines spektralen Messsystems liegt typischer Weise im Bereich von 90 bis 200 dpi, während Farbkameras eine höhere Auflösung haben.

Bevorzugt wird als bildgebendes Messsystem ein aus dem Stand der Technik bekanntes Inline Farbmesssystem (ICMS- Inline Colour Measurement System) der Firma ipac eingesetzt, das zur Farbbeurteilung mehrfärbiger Oberflächen eingesetzt wird. Ebenso bekannt ist das offline nutzbare System ACMS. Das spektrale bildgebende Messsystem weist einen spektralen inline angeordneten Scanner auf, der für verschiedene Trägermaterialien (Papier, Folie, Holz, Kunststoff, Keramik, Mineralstoff) und verschiedene Druckverfahren (Tiefdruck, Digitaldruck, Flexodruck, Offsetdruck, Siebdruck) eingesetzt werden kann. Das ICMS ist eine spektrale ortsaufgelöste Scantechnologie zur Messung eines Druckbildes und ist in der Lage, einen durch ein gut trainiertes und gesundes menschliches Auge wahrgenommenen bildgebenden Farbeindruck maschinell nachzuempfinden und den Farbeindruck einer umfassenden objektiven Bewertung zu unterziehen.

Das spektrale bildgebende Messsystem ist beispielsweise eine multispektrale Kamera mit 12 Bildkanälen pro aufgenommenem Bildpunkt, die pro Bildkanal eine Farbinformation erzeugt. Somit entsteht pro aufgenommenem Bildpunkt (Pixel) ein Farbspektrum aus ca. 10 bis 12 Bildkanälen. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können. In bevorzugter Weise entspricht das spektrale bildgebende Messsystem den Anforderungen der Norm ISO 24585 Teil 1 und 2.

Das spektrale bildgebende Messsystem kann auch eine hyperspektrale Kamera sein, bei der pro Bildpunkt mittels einer optischen Einrichtung, beispielsweise mittels eines Prismas, das Licht spektral aufgespalten und mit einzelne spektrale Bereiche separat gemessen werden. Dadurch erhöht sich die spektrale Auflösung gegenüber einer multispektralen Kamera auf ca. 20 bis zu 250 oder mehr Bildkanälen.

Im Gegensatz zu einer RGB-Kamera wird somit pro Bildpunkt nicht nur eine Farbe, sondern eine spektrale Verteilung mit erheblich mehr Informationstiefe gewonnen. Während der Messung werden normierte Lichtbedingungen eingehalten, beispielsweise beträgt die Messgeometrie des Bildgebungssystems 45°:0° (Eintritt:Austritt) .

Alternativ dazu kann das bildgebende Messsystem als mindestens ein Farbkamerasystem mit mindestens einer RGB-Kamera ausgebildet sein, das bevorzugt RGB-Bilddaten liefert. Die Messbilddatei weist dann RGB-Pixelinformationen auf, beispielsweise mit einer Farbtiefe von 16 Bit, auf deren Basis auch ohne spektrale Informationen geringe Farbunterschiede unterschieden werden können.

Das vom bildgebenden Messsystem aufgenommene Bild, ob spektral aufgelöst oder einzelne Farbwerte (RGB) enthaltend, wird umgewandelt in eine Darstellung des L*a*b*-Farbraums, der auch in dem nachfolgend erläutern Austauschfarbraum verwendet wird. Die L*a*b*-Originalmusterdatei dient im weiteren Verfahrensablauf als Referenz für die Überprüfung der farbgetreuen Wiedergabe als Druckergebnis.

c) Transfer der Eingangsdatei mit einem Eingabeprofil, beispielsweise in Form eines ICC-Profils, in einen geräteunabhängigen Austauschfarbraum, der beispielsweise ein L*a*b*-Farbraum, insbesondere ein CIELAB-Farbraum ist, und Erstellen einer L*a*b*-Austauschbilddatei. Da ein Vergleich von zwei Farbbildern im L*a*b*-Farbraum besonders einfach durchzuführen ist, wird diese Variante des Austauschfarbraums besonders bevorzugt verwendet.

d) Transfer der L*a*b*-Austauschbilddatei mit einem gerätespezifischen Ausgabeprofil in einen für einen Arbeitsdrucker anwendbaren Druckfarbraum, insbesondere CMYK, und Erzeugen einer Druckbilddatei. Das Ausgabeprofil ist - wie auch das Eingabeprofil - ein ICC-Profil und der Drucker ist bevorzugt ein CMYK-Arbeitsdrucker in Form eines Tintenstrahldruckers.

e) Drucken der Vergleichsbilddatei mit dem Arbeitsdrucker auf einem Trägermaterial als Vergleichsdruckbild, Vermessen des Vergleichsdruckbilds mit einem optischen Messsystem und Erzeugen einer L*a*b*Vergleichsbilddatei. Auch hierbei wird als optisches Messsystem bevorzugt das in Schritt b) bzw. im Schritt f) erwähnte optische Messsystem angewendet.

f) Ermitteln des Mittelwerts in mindestens einem der L*a*b*-Kanäle in der L*a*b*-Vergleichsbilddatei und des Mittelwerts in dem mindestens einem der L*a*b*-Kanäle in der L*a*b*-Originalmusterdatei. Durch eine Mittelung der Werte des mindestens einen der L*a*b*-Kanäle ergibt sich ein einfaches Verfahren, um allgemeine Abweichungen des gedruckten Vergleichsbildes bewerten zu können.

g) Berechnen der Differenz der Mittelwerte in dem mindestens einem der L*a*b*-Kanäle. Die Differenz der beiden Mittelwert zu dem mindestens einen der L*a*b*-Kanäle ergibt einen Korrekturwert, der den Gesamteindruck des gedruckten Vergleichsbildes in einfacher Weise verändern und korrigieren kann.

h) Korrigieren der Werte in der L*a*b*-Austauschbilddatei in dem mindestens einen L*a*b*-Kanal um die berechnete Differenz.

i) Transferieren der korrigierten L*a*b*-Austauschbilddatei mit dem gerätespezifischen Ausgabeprofil in einen für einen Arbeitsdrucker anwendbaren Druckfarbraum und Drucken mit dem Arbeitsdrucker auf einem Trägermaterial als Vergleichsdruckbild.

Somit wird erfindungsgemäß eine Korrektur aller Werte der L*a*b*-Austauschbilddatei in dem mindestens einen L*a*b*-Kanal vorgenommen. Das bedeutet, dass alle Werte des betreffenden L*a*b*-Kanals um ein gleiches Maß verändert und somit korrigiert werden. Überraschender Weise führt diese generelle Maßnahme zu einer einfachen und schnell durchzuführenden Korrektur der zu druckenden Bilddatei.

Die Korrektur der zu druckenden Datei wird also im Austauschfarbraum vorgenommen, ohne dabei einerseits die Eingangsdatei oder andererseits das Eingabeprofil oder das Ausgabeprofil zu verändern. Durch das Ändern der zu L*a*b*-Austauschbilddatei im Austauschfarbraum kann für die Korrektur die lineare Eigenschaft des L*a*b*-Farbraums ausgenutzt werden, da die Differenzwerte als Korrekturwerte einfach addiert bzw. subtrahiert werden können.

Die korrigierte L*a*b*-Austauschbilddatei ist also für das spezifische Design und den spezifischen Arbeitsdrucker angepasst und das Druckergebnis wird somit weitgehend an das Originalmuster angenähert, ohne dass noch eine manuelle Bemusterung durch einen Benutzer durchgeführt werden muss. Dabei hat sich herausgestellt, dass die Verwendung eines Mittelwertes erstaunlich gute Verbesserungen hervorbringt und dass keine Einzeldifferenzen verwendet werden müssen.

Bei einer Alternative wird ebenfalls der Mittelwert für den mindestens einen L*a*b*-Kanal berechnet. Der Mittelwert der ermittelten Differenzen wird dann mit dem Ausgabeprofil des Druckers in einen Druckmittelwert mindestens eines Kanals im Druckfarbraum umgerechnet. Danach werden die Werte der Druckbilddatei für den mindestens einen Kanal mit dem berechneten Druckmittelwert korrigiert (additiv oder proportional).

Bei der additiven Korrektur werden die Werte in der L*a*b*-Austauschbilddatei bzw. in der Druckbilddatei additiv um den Mittelwert nach oben oder unten verändert. Bei der proportionalen Korrektur werden die Werte in der Druckbilddatei proportional um eine Prozentzahl verändert, wobei sich die Prozentzahl aus dem Mittelwert des entsprechenden Kanals der Vergleichsbilddatei und den Mittelwert der ermittelten Differenzen ergibt.

In einer bevorzugten Ausgestaltung des vorigen Verfahrens wird für jeden der mindestens einen der L*a*b*-Kanäle die ermittelte Differenz jeweils mit einem Korrekturschwellenwert verglichen und nur dann, wenn die Differenz in mindestens einem der L*a*b*-Kanäle größer als der Korrekturschwellenwert ist, wird eine der zuvor beschriebenen Alternativen zu Korrektur angewendet. Dadurch wird vermieden, dass zu kleine Änderungen ausschlaggebend für das Erzeugen einer neuen L*a*b*-Korrekturdatei sind.

Die oben aufgezeigte Aufgabe wird erfindungsgemäß auch durch ein Verfahren mit den Merkmalen des Anspruchs 3 gelöst, wobei weitere Ausgestaltungen des Verfahrens in den Unteransprüchen angegeben sind.

Dieses Verfahren zur Steuerung der farbgetreuen Funktionsweise von mindestens einem Drucker weist eine Reihe von Schritten auf.
1) Erstellen einer Eingangsdatei mit einem Eingabeprofil, insbesondere mit einem ICC-Profil, in einen geräteunabhängigen Austauschfarbraum, insbesondere L*a*b*-Farbraum, vorzugsweise CIELAB-Farbraum, transferiert und eine L*a*b*-Austauschbilddatei. Die Eingangsbilddatei entspricht in er Regel einer digitalen Form eines Originalmusters, dessen möglichst genaue Reproduktion angestrebt ist.
2) Transferieren der L*a*b*-Austauschbilddatei mit einem gerätespezifischen Ausgabeprofil, insbesondere einem ICC-Profil, in einen für einen Referenzdrucker, insbesondere einem CMYK-Referenzdrucker, anwendbaren Druckfarbraum, insbesondere CMYK-Farbraum, und Erzeugen einer Referenzdruckbilddatei. Somit liegt eine für die Ausgabe auf dem Referenzdrucker geeignete Fassung der Eingangsdatei vor.
3) Erzeugen einer Fingerabdruckdatei mit einer Mehrzahl von verschiedenen Farbwerten zugeordneten Farbfeldern aus der Referenzdruckbilddatei, wobei zumindest ein Teil der Farbwerte designspezifische Farbwerte sind.

Bevorzugt ist dabei einer Fingerabdruckdatei mit Aufteilung in Farbfelder, die einerseits standardisierte Farben und andererseits sich aus dem zu druckenden Design zu ermittelnden Farben enthalten. Somit können die durch die Farbfelder gebildeten Stützstellen in dem Profil besser an das zu druckende Design angepasst werden. Das Farbchart wird wegen der Spezifizität eines Teils der Farbfelder auch als Fingerabdruckchart bzw. die zugrunde liegende Datei als Fingerabdruckdatei bezeichnet.

Beispielsweise werden aus dem Design in Pixeln oder in Pixelgruppen aufgeteilt Farbwerte ermittelt und nach Häufigkeit des Auftretens der Farbwerte sortiert. In Abhängigkeit von ihrer Häufigkeit werden dann die häufigsten Farbwerte ausgewählt, also eine endliche Menge von n Farbwerten, wobei n beispielsweise Werte zwischen 100 und 400 annehmen kann. In einem Farbchart von beispielsweise 1000 Farbfeldern wären dann 10-40% der Farbfelder durch das Design bestimmt.

Wird das Farbchart der Fingerabdruckdatei gedruckt und vermessen, so kann insbesondere durch die designspezifischen Farbfelder eine bessere Voreinstellung des Drucksystems für das spezifische Design erfolgen.

4) Drucken der Fingerabdruckdatei mit dem Referenzdrucker und Vermessen des Referenzdruckbilds mit einem optischen Messsystem. Das optische Messsystem kann dabei jedes bildgebende Farbmesssystem sein.

Das bildgebende Farbmesssystem kann als spektrales Messsystem oder als Farbkamera, insbesondere als RGB-Kamera ausgebildet sein. Die räumliche Auflösung eines spektralen Messsystems liegt typischer Weise im Bereich von 90 bis 200 dpi, während Farbkameras eine höhere Auflösung haben.

Bevorzugt wird als bildgebendes Messsystem ein aus dem Stand der Technik bekanntes Inline Farbmesssystem (ICMS - Inline Colour Measurement System) der Firma ipac eingesetzt, das zur Farbbeurteilung mehrfärbiger Oberflächen eingesetzt wird. Das spektrale bildgebende Messsystem weist einen spektralen inline angeordneten Scanner auf, der für verschiedene Trägermaterialien wie Papier, Folie, Holz, Kunststoff, Keramik oder Mineralstoff und verschiedene Druckverfahren wie Tiefdruck, Digitaldruck, Flexodruck, Offsetdruck oder Siebdruck eingesetzt werden kann. Das ICMS ist eine spektrale ortsaufgelöste Scantechnologie zur Messung eines Druckbildes und ist in der Lage, einen durch ein gut trainiertes und gesundes menschliches Auge wahrgenommenen bildgebenden Farbeindruck maschinell nachzuempfinden und den Farbeindruck einer umfassenden objektiven Bewertung zu unterziehen.

Das spektrale bildgebende Messsystem ist beispielsweise eine multispektrale Kamera mit 12 Bildkanälen pro aufgenommenem Bildpunkt, die pro Bildkanal eine Farbinformation erzeugt. Somit entsteht pro aufgenommenem Bildpunkt (Pixel) ein Farbspektrum aus ca. 10 bis 12 Bildkanälen. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können. In bevorzugter Weise entspricht das spektrale bildgebende Messsystem den Anforderungen der Norm ISO 24585 Teil 1 und 2.

Das spektrale bildgebende Messsystem kann auch eine hyperspektrale Kamera sein, bei der pro Bildpunkt mittels einer optischen Einrichtung, beispielsweise mittels eines Prismas, das Licht spektral aufgespalten und mit einzelne spektrale Bereiche separat gemessen werden. Dadurch erhöht sich die spektrale Auflösung gegenüber einer multispektralen Kamera auf ca. 20 bis zu 250 oder mehr Bildkanälen.

Im Gegensatz zu einer RGB-Kamera wird somit pro Bildpunkt nicht nur eine Farbe, sondern eine spektrale Verteilung mit erheblich mehr Informationstiefe gewonnen. Während der Messung werden normierte Lichtbedingungen eingehalten, beispielsweise beträgt die Messgeometrie des Bildgebungssystems 45°:0° (Eintritt:Austritt) .

Alternativ dazu kann das bildgebende Messsystem als mindestens ein Farbkamerasystem mit mindestens einer RGB-Kamera ausgebildet sein, das bevorzugt RGB-Bilddaten liefert. Die Messbilddatei weist dann RGB-Pixelinformationen auf, beispielsweise mit einer Farbtiefe von 16 bit, auf deren Basis auch ohne spektrale Informationen geringe Farbunterschiede unterschieden werden können.

Das vom bildgebenden Messsystem aufgenommen Bild, ob spektral aufgelöst oder einzelne Farbwerte, insbesondere RGB, enthaltend, wird umgewandelt in eine Darstellung des L*a*b*-Farbraums, der auch in dem nachfolgend erläutern Austauschfarbraum verwendet wird. Die L*a*b*-Originalmusterdatei dient im weiteren Verfahrensablauf als Referenz für die Überprüfung der farbgetreuen Wiedergabe als Druckergebnis.

5) Verknüpfen der vom Messsystem erzeugten L*a*b*-Messwerte für die Farbfelder der Fingerabdruckdatei mit den druckerspezifischen Farbwerten, insbesondere CMYK, und Erzeugen eines Fingerabdruckprofils, insbesondere ICC-Profil. Das Fingerabdruckprofil enthält eine Tabelle, in der die Stützstellen des Fingerabdrucks mit den einander korrespondierenden L*a*b*-Werten und druckerspezifischen Werten.

6) Erzeugen einer Fingerabdruckproduktionsdatei aus der Referenzdruckbilddatei und dem Fingerabdruckprofil erzeugt. Die Fingerabdruckproduktionsdatei enthält also sowohl die Daten der Referenzdruckbildes als auch die Daten des Fingerabdruckprofils.

7) Erzeugen einer neuen Fingerabdruckdatei mit der Fingerabdruckproduktionsdatei für den Arbeitsdrucker, die nachfolgend ausgedruckt wird, siehe unten.

Da das Ziel des beschriebenen Verfahrens eine möglichst gute Reproduktion eines Eingangsbildes auf einem vom Referenzdrucker abweichenden Drucker ist, wird in diesem Schritt ein Arbeitsdrucker eingesetzt, der ein Drucker gleicher Bauart oder anderer Bauart, aber unterschiedlich zum Referenzdrucker ist.

8) Durchführen einer nachfolgenden Schleife mit einem Zähler N, wobei der Zähler N zu Beginn gleich 0 gesetzt wird.

8.1) Dann, wenn N>0 ist, also ab dem zweiten Durchlauf dieser Schrittfolge, Umrechnen der im Schritt 8.6 ermittelten L*a*b*-Korrekturwerte in Korrekturwerte der zugeordneten druckerspezifischen Farbwerte mittels des druckerspezifischen Ausgabeprofils und Speichern der Korrekturwerte in einem Korrekturprofil und Korrigieren der druckerspezifischen Farbwerte der Fingerabdruckzieldatei mit dem Korrekturprofil.

Die Korrektur betrifft die druckerspezifischen Farbwerte, beispielsweise der CMYK-Werte, die mit Hilfe der Stützstellen der Fingerabdruck für die Fingerabdruckzieldatei berechnet worden sind. Die Korrektur findet daher nach der Anwendung der Fingerabdruckprofil statt und korrigiert die für den Arbeitsdrucker erstellte Durckdatei.

Die Korrektur kann dabei linear oder proportional erfolgen. Die proportionale Korrektur hat den Vorteil, dass der Weißpunkt, d.h. beispielsweise, dass alle CMYK-Farbwerte gleich Null sind, nicht verändert wird.

8.2) Transferieren der, gegebenenfalls korrigierten, Fingerabdruckdatei als Eingangsdatei mit dem Fingerabdruckprofil in den L*a*b*-Austauschfarbraum transferiert, und mit dem druckerspezifischen Ausgabeprofil in den für den Arbeitsdrucker anwendbaren Druckfarbraum und Erzeugen einer Vergleichsbilddatei.

Die in Schritt 8.1 korrigierte Fingerabdruckzieldatei wird somit für den Druck vorbereitet und im nachfolgenden Schritt gedruckt.

8.3) Drucken der Vergleichsbilddatei mit dem Arbeitsdrucker auf einem Trägermaterial als Vergleichsdruckbild, Vermessen des Vergleichsdruckbilds mit einem optischen Messsystem und Erzeugen einer L*a*b*Vergleichsbilddatei, 8.4) Ermitteln der Differenzen zwischen den L*a*b*-Werten der L*a*b*-Vergleichsbilddatei und den L*a*b*-Werten der Fingerabdruckdatei in mindestens einem der L*a*b*-Kanäle.

Das Vergleichsdruckbild wird somit in den Schritten 8.3 und 8.4 als Maß dafür genommen, mit welcher Genauigkeit der rechnerische Transfer ausgehend von der Fingerabdruckdatei in den L*a*b*-Farbraum und weiter mittels des Fingerabdruckprofils und ggf. des Korrekturprofils in den druckspezifischen Farbraum des Arbeitsdruckers erreicht worden ist. Die Differenzen werden dann weiter im nächsten Schritt verarbeitet.

8.5) Vergleichen der Differenzen mit einem Toleranzwert, wobei als Differenzwert ein Mittelwert oder ein Median einer Mehrzahl von Differenzen berechnet wird.

Die Mittelwerte oder Medianwerte der Differenzwerte können auch separat für die designspezifischen Farben und die Standardprofilfarben ermittelt werden. Somit kann eine Entscheidung auf der Basis der Differenzwerte für die designspezifischen Farben und/oder auf der Basis der Differenzwerte für die Standardprofilfarben getroffen werden.

8.6) Dann, wenn die Differenzen zumindest teilweise außerhalb der Toleranz liegen, Speichern der Differenzen als L*a*b*-Korrekturwerte, Erhöhen des Zählers N um 1 (N=N+1) und Fortführen des Verfahrens mit Schritt 8.1.

9) Dann, wenn die Differenzen innerhalb der Toleranz liegen, Transferieren der aus der Referenzbilddatei mit dem Fingerabdruckprofil berechneten L*a*b*-Austauschbilddatei mit dem druckerspezifischen Ausgabeprofil in den für einen Arbeitsdrucker anwendbaren Druckfarbraum als Ausgabedruckdatei unter Berücksichtigung der Korrekturwerte.

Somit wird iterativ so lange die Korrekturschleife 8.1 bis 8.6 durchlaufen, bis die Qualitätsanforderungen gemäß der Toleranz erfüllt sind.

10) Anwenden der im Schritt 8.1) iterativ ermittelten Korrekturwerte der druckerspezifischen Farbwerte zumindest teilweise, insbesondere vollständig auf die Ausgabedruckdatei und Erzeugen einer korrigierten Ausgabedruckdatei.

Die ermittelten Korrekturwerte werden somit für ein Drucken der Eingangsdatei auf dem Arbeitsdrucker verwendet, um ein möglichst genaues Übereinstimmen des Druckbildes auf dem Arbeitsdrucker mit der eingangsseitigen Eingangsdatei zu erreichen.

11) Drucken der korrigierten Ausgabedruckdatei mit dem Arbeitsdrucker auf einem Trägermaterial als Ausgabedruckbild.

In bevorzugter Weise werden dabei die im Schritt 8.1) erzeugten Korrekturwerte der zugeordneten druckerspezifischen Farbwerte für jeden Iterationsschritt separat als Korrekturprofil gespeichert und im Schritt 10) zumindest teilweise angewendet. Somit kann im Nachgang nach der erfolgten Berechnung der iterativen Korrekturen die Korrektur auch nur teilweise angewendet werden, um die Farbänderungen auch bei der aus der Eingangsdatei erzeugten Druckdatei nachvollziehen zu können. Dieses erfordert aber einen erhöhten Rechenaufwand.

Daher kann es auch bevorzugt sein, die im Schritt 8.1) erzeugten Korrekturwerte der zugeordneten druckerspezifischen Farbwerte in jeden Iterationsschritt aufsummiert und in dem Korrekturprofil zu speichern und die Korrekturwertedatei als Ganzes in Schritt 10) anzuwenden.

Im Folgenden wird die Erfindung anhand von Ausführungsbeispielen mit Bezug auf die Zeichnung erläutert. In der Zeichnung zeigen
- Fig. 1: eine erste Anlage zur Durchführung eines erfindungsgemäßen Verfahrens,
- Fig. 2: eine zweite Anlage zur Durchführung eines erfindungsgemäßen Verfahrens,
- Fig. 3: eine dritte Anlage zur Durchführung eines erfindungsgemäßen Verfahrens,
- Fig. 4: ein Flussdiagramm, das ein erstes erfindungsgemäßes Verfahren beschreibt,
- Fig. 5: ein Flussdiagramm, das ein zweites erfindungsgemäßes Verfahren beschreibt und
- Fig. 6: ein Flussdiagramm, das ein drittes erfindungsgemäßes Verfahren beschreibt.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

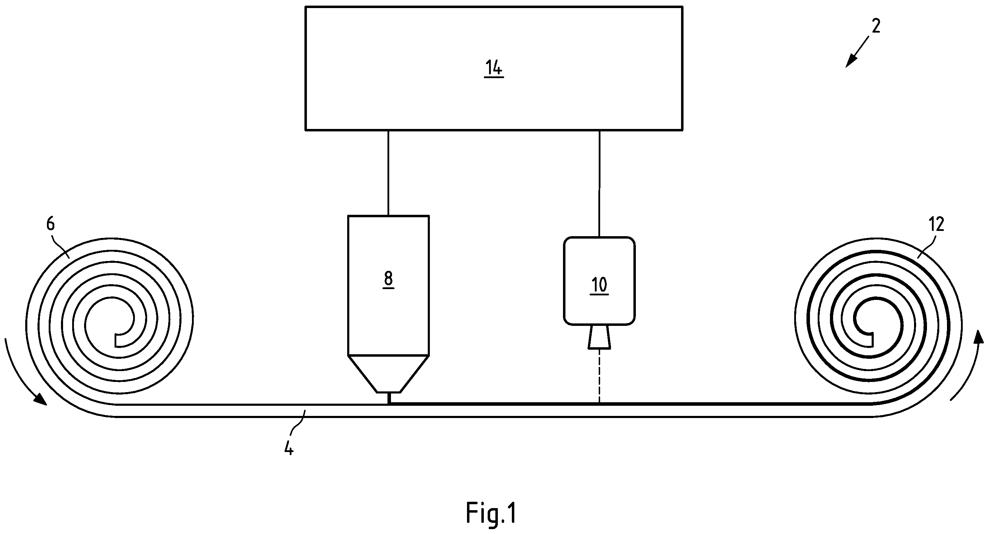

Fig. 1 zeigt eine erste Anlage 2 zur Durchführung des Verfahrens zur automatisierten Charakterisierung eines kontinuierlichen Digitaldrucksystems. Zunächst wird das Trägermaterial 4 von einer ersten Rolle 6 abgerollt, unterhalb des Digitaldruckers 8 und des optischen Messsystems 10 geführt und dann wieder auf einer Rolle 12 aufgerollt. Insoweit kann man von einem endlosen Trägermaterial 4 sprechen, mit dem das kontinuierliche Drucken und Charakterisieren durchgeführt wird. Dabei ist selbstverständlich, dass das endlose Band eine endliche, aber große Länge aufweist.

Die Ergebnisse der optischen Messungen durch das optische Messsystem werden einer Steuer- und Charakterisierungseinrichtung 14 übertragen, die wiederum nicht nur die Druckdateien oder andere Steuerungsdateien, sondern auch die Charakterisierungsdateien auf den Digitaldrucker 8 überträgt.

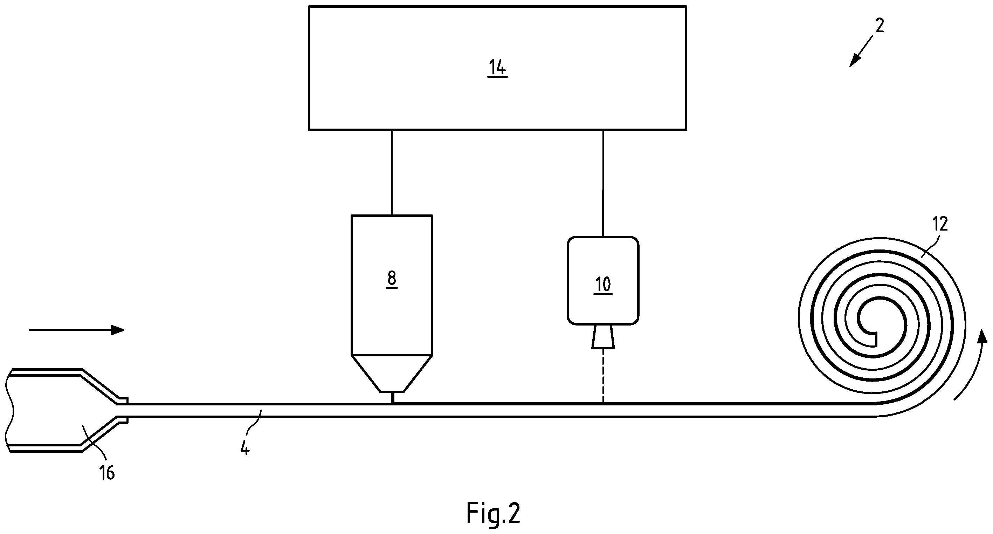

Fig. 2 zeigt eine zweite Anlage 2 zur Durchführung des Verfahrens zur automatisierten Charakterisierung eines kontinuierlichen Digitaldrucksystems. Im Vergleich zur Anlage nach Fig. 2 wird das Trägermaterial 4 nicht von einer Rolle abgewickelt, sondern durch eine Extrusionsprozess hergestellt. Dazu ist schematisch ein Extrusionswerkzeug 16 dargestellt, aus dem ein Strang zur Herstellung beispielsweise eines Kantenmaterials für die Anwendung bei Möbelplatten extrudiert wird. Grundsätzlich notwendige Kalander und Abkühlstationen sind hier der Einfachheit wegen nicht dargestellt. Anstelle des Extrusionswerkzeugs 16 kann auch eine Stranggussvorrichtung eingesetzt werden, um einen kontinuierlichen Strang an Trägermaterial zu erzeugen.

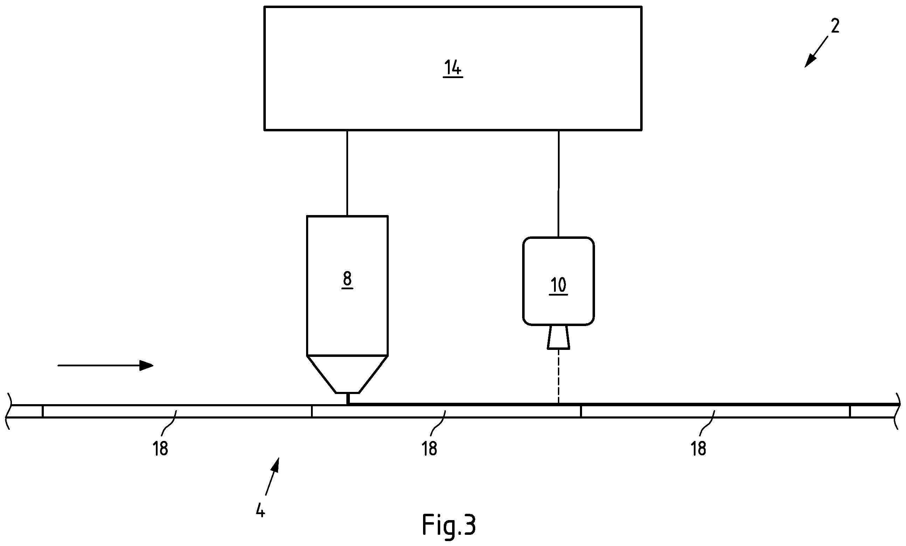

Fig. 3 zeigt eine dritte Anlage 2 zur Durchführung des Verfahrens zur automatisierten Charakterisierung eines kontinuierlichen Digitaldrucksystems. Im Vergleich zu den Anlagen nach den Fig. 2 und 3 ist das Trägermaterial 4 nicht als endloses Material ausgebildet, sondern besteht aus einer Vielzahl von aneinander anstoßenden Elementen 18, beispielsweise Platten oder Blättern. Das Trägermaterial 4 besteht also aus einzelnen Elementen 18, die vor und nach dem Bedrucken separat vorliegen. Das kontinuierliche Drucken und Messen von Farbcharts erfolgt dann auf dem aus einzelnen Elementen 18 zusammengesetzten Trägermaterial 4.

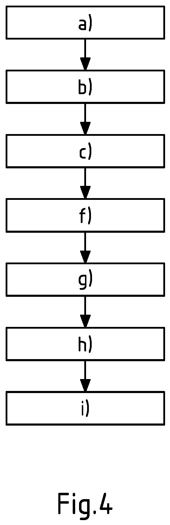

In Fig. 4 ist ein erstes Ausführungsbeispiel eines erfindungsgemäßen Verfahrens zur Steuerung der farbgetreuen Funktionsweise von mindestens einem Drucker in den einzelnen Schritten dargestellt.

Schritt a): eine Eingangsdatei mit einem Design wird als Originalmuster mit einem Referenzdrucker ausgedruckt.

Schritt b): das Originalmuster wird mit einem optischen Messsystem digitalisiert und in einem L*a*b*-Farbraum als L*a*b*-Originalmusterdatei, beispielsweise in CIELAB, gespeichert.

Schritt c): die Eingangsdatei wird mit einem Eingabeprofil in Form eines ICC-Profils in einen geräteunabhängigen Austauschfarbraum, hier L*a*b*-Farbraum bzw. CIELAB-Farbraum transferiert und eine L*a*b*-Austauschbilddatei wird erstellt.

Schritt d): die L*a*b*-Austauschbilddatei wird mit einem gerätespezifischen Ausgabeprofil in Form eines ICC-Profils in einen für den CMYK-Arbeitsdrucker anwendbaren CMYK-Druckfarbraum transferiert und eine Druckbilddatei wird erzeugt.

Schritt e): die Vergleichsbilddatei wird mit dem CMYK-Arbeitsdrucker auf einem Trägermaterial als Vergleichsdruckbild gedruckt, das Vergleichsdruckbild wird mit einem optischen Messsystem vermessen und eine L*a*b*Vergleichsbilddatei wird erzeugt wird.

Schritt f): der Mittelwert in mindestens einem der L*a*b*-Kanäle in der L*a*b*-Vergleichsbilddatei und der Mittelwert in dem mindestens einem der L*a*b*-Kanäle in der L*a*b*-Originalmusterdatei werden ermittelt.

Schritt g): die Differenz der Mittelwerte in dem mindestens einem der L*a*b*-Kanäle wird berechnet.

Schritt h): die Werte in der L*a*b*-Austauschbilddatei in dem mindestens einen L*a*b*-Kanal um die berechnete Differenz werden korrigiert.

Schritt i): die korrigierte L*a*b*-Austauschbilddatei wird mit dem gerätespezifischen Ausgabeprofil in einen für einen Arbeitsdrucker anwendbaren Druckfarbraum transferiert und mit dem Arbeitsdrucker auf einem Trägermaterial als Vergleichsdruckbild gedruckt.

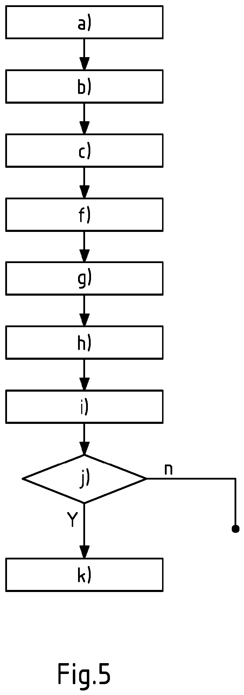

Fig. 5 zeigt eine ergänzende und somit alternative Variante des zuvor beschriebenen Verfahrens zunächst mit den Schritten a) bis i). Zusätzlich wird in Schritt j) für jeden der mindestens einen der L*a*b*-Kanäle die Differenz jeweils mit einem Korrekturschwellenwert verglichen. Dieser Vergleichsschritt wird mit der entsprechenden Raute dargestellt. Nur dann, wenn die Differenz in mindestens einem der L*a*b*-Kanäle größer als der Korrekturschwellenwert ist und sich das Ergebnis y (yes) ergibt, werden im Schritt k) eine Korrektur gemäß eine der drei Alternativen durchgeführt. Wenn die Differenz in keinem der L*a*b*-Kanäle größer als der Korrekturschwellenwert ist und sich das Ergebnis n (no) ergibt, wird keine Korrektur vorgenommen.

Das Verfahren kann dadurch weitergeführt werden, dass die L*a*b*-Korrekturbilddatei mit dem Fingerabdruckprofil in den für den CMYK-Arbeitsdrucker anwendbaren CMYK-Druckfarbraum transferiert und eine Korrekturdruckdatei erzeugt wird und dass die Korrekturbilddatei mit dem CMYK-Arbeitsdrucker auf einem Trägermaterial gedruckt wird. Somit wird ein verbessertes Druckergebnis erzielt.

Bei den zuvor beschriebenen Varianten des Verfahrens ist weiterhin bevorzugt, dass die Differenzen in dem mindestens einen L*a*b*-Kanal über zumindest einen Teil aller Differenzwerte, vorzugsweise über alle Differenzwerte gemittelt werden. Da pro Farbmessfeld eine Mehrzahl von Messpunkten ermittelt werden kann, kann somit die Genauigkeit des Verfahrens verbessert werden.

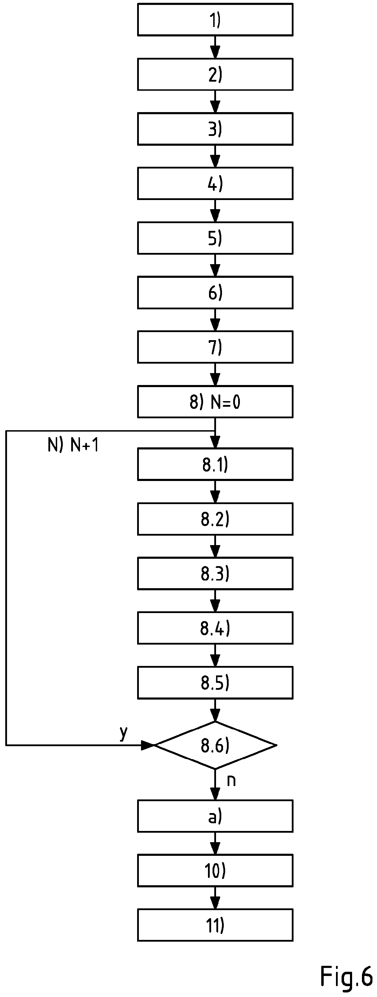

Fig. 6 zeigt ein weiteres erfindungsgemäßes Verfahren zur Steuerung der farbgetreuen Funktionsweise von mindestens einem Drucker mit den nachfolgend erläuterten Verfahrensschritten.

Schritt 1): eine Eingangsdatei mit einem Eingabeprofil in Form eines ICC-Profils wird in einen geräteunabhängigen Austauschfarbraum in Form eines L*a*b*-Farbraums, vorzugsweise CIELAB-Farbraums, transferiert und eine L*a*b*-Austauschbilddatei wird erstellt.

Schritt 2): die L*a*b*-Austauschbilddatei mit einem gerätespezifischen Ausgabeprofil in Form eines ICC-Profils in einen für einen CMYK-Referenzdrucker anwendbaren CMYK-Druckfarbraum transferiert und eine Referenzdruckbilddatei wird erzeugt.

Schritt 3): eine Fingerabdruckdatei wird mit einer Mehrzahl von verschiedenen Farbwerten zugeordneten Farbfeldern aus der Referenzdruckbilddatei erzeugt, wobei zumindest ein Teil der Farbwerte designspezifische Farbwerte sind. Dazu werden die im Design auftretenden Farbwerte statistisch ausgewertet und in Abhängigkeit von ihrer Häufigkeit werden die Farbwerte ausgewählt. Dabei entsteht eine endliche Menge mit n=100-400 Farbwerten, die zusätzlich zu standardmäßig gewählten Stützstellen für das ICC-Profil verwendet werden.

Schritt 4): die Fingerabdruckdatei mit dem CMYK-Referenzdrucker gedruckt und das Referenzdruckbild wird mit einem optischen Messsystem vermessen. Das optische Messsystem ist dabei bevorzugt ein spektrales Messsystem, das die L*a*b*-Farbwerte ermittelt.

Schritt 5): die vom Messsystem erzeugten L*a*b*-Messwerte für die Farbfelder der Fingerabdruckdatei werden mit den druckerspezifischen CMYK-Farbwerten verknüpft und ein Fingerabdruckprofil in Form eines ICC-Profils wird erzeugt. Schritt 6): eine Fingerabdruckproduktionsdatei wird aus der Referenzdruckbilddatei und dem Fingerabdruckprofil erzeugt.

Schritt 7): eine neue Fingerabdruckdatei wird mit der Fingerabdruckproduktionsdatei für den Arbeitsdrucker erzeugt.

Schritt 8): eine nachfolgende Schleife mit einem Zähler N wird durchgeführt, wobei der Zähler N zu Beginn gleich 0 gesetzt wird.

Schritt 8.1): Dann, wenn N>0 ist, also ab dem zweiten Durchlauf dieser Schrittfolge, werden die im Schritt 8.6 ermittelten L*a*b*-Korrekturwerte in Korrekturwerte der zugeordneten druckerspezifischen CMYK-Farbwerte mittels des druckerspezifischen Ausgabeprofils umgerechnet und in einem Korrekturprofil gespeichert und die druckerspezifischen CMYK-Farbwerte der Fingerabdruckzieldatei werden mit dem Korrekturprofil korrigiert.

Schritt 8.2): die, gegebenenfalls korrigierte, Fingerabdruckdatei wird als Eingangsdatei mit dem Fingerabdruckprofil in den L*a*b*-Austauschfarbraum transferiert, mit dem druckerspezifischen Ausgabeprofil in den für den Arbeitsdrucker anwendbaren Druckfarbraum transferiert und eine Vergleichsbilddatei erzeugt.

Schritt 8.3): die Vergleichsbilddatei mit dem CMYK-Arbeitsdrucker auf einem Trägermaterial als Vergleichsdruckbild gedruckt, das Vergleichsdruckbild wird mit einem optischen Messsystem vermessen und eine L*a*b*-Vergleichsbilddatei wird erzeugt.

Schritt 8.4): die Differenzen zwischen den L*a*b*-Werten der L*a*b*-Vergleichsbilddatei und den L*a*b*-Werten der Fingerabdruckdatei werden in mindestens einem der L*a*b*-Kanäle ermittelt.

Schritt 8.5): die Differenzen werden mit einem Toleranzwert verglichen.

Schritt 8.6): dann, wenn die Differenzen zumindest teilweise außerhalb der Toleranz liegen, werden die Differenzen als L*a*b*-Korrekturwerte gespeichert, wird der Zähler N um 1 erhöht (N=N+1) und das Verfahren wird mit Schritt 8.1 fortgeführt.

Schritt 9): dann, wenn die Differenzen innerhalb der Toleranz liegen, wird die aus der Referenzbilddatei mit dem Fingerabdruckprofil berechnete L*a*b*-Austauschbilddatei mit dem druckerspezifischen Ausgabeprofil in den für einen CMYK-Arbeitsdrucker anwendbaren CMYK-Druckfarbraum als Ausgabedruckdatei unter Berücksichtigung der Korrekturwerte transferiert.

Schritt 10): die im Schritt 8.1) iterativ ermittelten Korrekturwerte der druckerspezifischen CMYK-Farbwerte werden zumindest teilweise, insbesondere vollständig auf die Ausgabedruckdatei angewendet und eine korrigierte Ausgabedruckdatei wird erzeugt.

Schritt 11): die korrigierte Ausgabedruckdatei mit dem CMYK-Arbeitsdrucker auf einem Trägermaterial als Ausgabedruckbild gedruckt.

Die beiden nachfolgenden Alternativen sind beide bevorzugt bei der Durchführung des Verfahrens. Zum einen können die im Schritt 8.1) erzeugten Korrekturwerte der zugeordneten druckerspezifischen Farbwerte (CMYK) für jeden Iterationsschritt separat als Korrekturprofil gespeichert werden und im Schritt 10) zumindest teilweise angewendet werden. Zum anderen können die im Schritt 8.1) erzeugten Korrekturwerte der zugeordneten druckerspezifischen Farbwerte (CMYK) in jeden Iterationsschritt aufsummiert und in dem Korrekturprofil gespeichert werden und bei dem die Korrekturwertedatei in Schritt 10) angewendet wird.

## Patentansprüche

1. Verfahren zur Steuerung der farbgetreuen Funktionsweise von mindestens einem Drucker,
a) bei dem eine Eingangsdatei mit einem Design als Originalmuster mit einem Referenzdrucker ausgedruckt wird,
b) bei dem das Originalmuster mit einem optischen Messsystem digitalisiert und in einem L*a*b*-Farbraum als L*a*b*-Originalmusterdatei gespeichert wird,
c) bei dem die Eingangsdatei mit einem Eingabeprofil in einen geräteunabhängigen Austauschfarbraum transferiert und eine L*a*b*-Austauschbilddatei erstellt wird,
d) bei dem die L*a*b*-Austauschbilddatei mit einem gerätespezifischen Ausgabeprofil in einen für einen Arbeitsdrucker anwendbaren Druckfarbraum transferiert und eine Vergleichsbilddatei erzeugt wird,
e) bei dem die Vergleichsbilddatei mit dem Arbeitsdrucker auf einem Trägermaterial als Vergleichsdruckbild gedruckt wird, das Vergleichsdruckbild mit einem optischen Messsystem vermessen wird und eine L*a*b*Vergleichsbilddatei erzeugt wird,
f) bei dem der Mittelwert in mindestens einem der L*a*b*-Kanäle in der L*a*b*-Vergleichsbilddatei und der Mittelwert in dem mindestens einem der L*a*b*-Kanäle in der L*a*b*-Originalmusterdatei ermittelt werden,
g) bei dem die Differenz der Mittelwerte in dem mindestens einem der L*a*b*-Kanäle berechnet wird,
h) bei dem die Werte in der L*a*b*-Austauschbilddatei in dem mindestens einen L*a*b*-Kanal um die berechnete Differenz korrigiert werden und
i) bei dem die korrigierte L*a*b*-Austauschbilddatei mit dem gerätespezifischen Ausgabeprofil in einen für einen Arbeitsdrucker anwendbaren Druckfarbraum transferiert und mit dem Arbeitsdrucker auf einem Trägermaterial als Vergleichsdruckbild gedruckt wird.

2. Verfahren nach Anspruch 1,
- bei dem für jeden der mindestens einen der L*a*b*-Kanäle die Differenz jeweils mit einem Korrekturschwellenwert verglichen wird und
- bei dem nur dann, wenn die Differenz in mindestens einem der L*a*b*-Kanäle größer als der Korrekturschwellenwert ist, eine Korrektur durchgeführt wird..

3. Verfahren zur Steuerung der farbgetreuen Funktionsweise von mindestens einem Drucker,
1) bei dem eine Eingangsdatei mit einem Eingabeprofil in einen geräteunabhängigen Austauschfarbraum transferiert und eine L*a*b*-Austauschbilddatei erstellt wird,
2) bei dem die L*a*b*-Austauschbilddatei mit einem gerätespezifischen Ausgabeprofil in einen für einen Referenzdrucker anwendbaren Druckfarbraum transferiert und eine Referenzdruckbilddatei erzeugt wird,
3) bei dem eine Fingerabdruckdatei mit einer Mehrzahl von verschiedenen Farbwerten zugeordneten Farbfeldern aus der Referenzdruckbilddatei erzeugt wird, wobei zumindest ein Teil der Farbwerte designspezifische Farbwerte sind,
4) bei dem die Fingerabdruckdatei mit dem Referenzdrucker gedruckt und das Referenzdruckbild mit einem optischen Messsystem vermessen wird,
5) bei dem die vom Messsystem erzeugten L*a*b*-Messwerte für die Farbfelder der Fingerabdruckdatei mit den druckerspezifischen Farbwerten verknüpft werden und ein Fingerabdruckprofil erzeugt wird,
6) bei dem eine Fingerabdruckproduktionsdatei aus der Referenzdruckbilddatei und dem Fingerabdruckprofil erzeugt wird,
7) bei dem eine neue Fingerabdruckdatei mit der Fingerabdruckproduktionsdatei für den Arbeitsdrucker erzeugt wird,8) bei dem eine nachfolgende Schleife mit einem Zähler N durchgeführt wird, wobei der Zähler N zu Beginn gleich 0 gesetzt wird,
8.1) bei dem dann, wenn N>0 ist, die im Schritt 8.6 ermittelten L*a*b*-Korrekturwerte in Korrekturwerte der zugeordneten druckerspezifischen Farbwerte mittels des druckerspezifischen Ausgabeprofils umgerechnet und in einem Korrekturprofil gespeichert werden, und bei dem die druckerspezifischen Farbwerte der Fingerabdruckdatei mit dem Korrekturprofil korrigiert werden,
8.2) bei dem die, gegebenenfalls korrigierte, Fingerabdruckdatei als Eingangsdatei mit dem Fingerabdruckprofil in den L*a*b*-Austauschfarbraum transferiert und mit dem druckerspezifischen Ausgabeprofil in den für den Arbeitsdrucker anwendbaren Druckfarbraum transferiert und eine Vergleichsbilddatei erzeugt wird,
8.3) bei dem die Vergleichsbilddatei mit dem Arbeitsdrucker auf einem Trägermaterial als Vergleichsdruckbild gedruckt wird, das Vergleichsdruckbild mit einem optischen Messsystem vermessen wird und eine L*a*b*Vergleichsdatei erzeugt wird,
8.4) bei dem die Differenzen zwischen den L*a*b*-Werten der L*a*b*-Vergleichsdatei und den L*a*b*-Werten der Fingerabdruckdatei in mindestens einem der L*a*b*-Kanäle ermittelt werden,
8.5) bei dem die Differenzen mit einem Toleranzwert verglichen werden,
8.6) bei dem dann, wenn die Differenzen zumindest teilweise außerhalb der Toleranz liegen, die Differenzen als L*a*b*-Korrekturwerte gespeichert werden, der Zähler N um 1 erhöht wird (N=N+1) und das Verfahren mit Schritt 8.1 fortgeführt wird,
9) bei dem dann, wenn die Differenzen innerhalb der Toleranz liegen, die aus der Referenzbilddatei mit dem Fingerabdruckprofil berechnete L*a*b*-Austauschbilddatei mit dem druckerspezifischen Ausgabeprofil in den für einen Arbeitsdrucker anwendbaren Druckfarbraum als Ausgabedruckdatei unter Berücksichtigung der Korrekturwerte transferiert wird,
10) bei dem die im Schritt 8.1) iterativ ermittelten Korrekturwerte der druckerspezifischen Farbwerte zumindest teilweise, insbesondere vollständig auf die Ausgabedruckdatei angewendet werden und eine korrigierte Ausgabedruckdatei erzeugt wird und
11) bei dem die korrigierte Ausgabedruckdatei mit dem Arbeitsdrucker auf einem Trägermaterial als Ausgabedruckbild gedruckt wird.

4. Verfahren nach Anspruch 3,
bei dem die im Schritt 8.1) erzeugten Korrekturwerte der zugeordneten druckerspezifischen Farbwerte für jeden Iterationsschritt separat als Korrekturprofil gespeichert werden und im Schritt 10) zumindest teilweise angewendet werden.

5. Verfahren nach Anspruch 3,
bei dem die im Schritt 8.1) erzeugten Korrekturwerte der zugeordneten druckerspezifischen Farbwerte in jeden Iterationsschritt aufsummiert und in dem Korrekturprofil gespeichert werden und bei dem die Korrekturwertedatei in Schritt 10) angewendet wird.
